(19)

Europäisches
Patentamt

European
Patent Office

Office européen
des brevets

(11) **EP 2 589 923 B1**

(12) **EUROPEAN PATENT SPECIFICATION**

(45) Date of publication and mention
of the grant of the patent:
**09.07.2014 Bulletin 2014/28**

(51) Int Cl.:
**G01B 9/02** *(2006.01)*    **G01S 17/32** *(2006.01)*

(21) Application number: **12007156.8**

(22) Date of filing: **16.10.2012**

(54) **Counter chirped frequency-scan interferometer with multiple laser sources**

Frequenz-Scanning-Interferometer mit entgegengesetzter Frequenzmodulation und mehreren
Laserquellen

Interféromètre à balayage de fréquence avec modulation de fréquence opposée comportant des
sources laser multiples

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **01.11.2011 JP 2011240660**

(43) Date of publication of application:
**08.05.2013 Bulletin 2013/19**

(73) Proprietor: **Canon Kabushiki Kaisha
Ohta-ku
Tokyo (JP)**

(72) Inventor: **Nishikawa, Yuya
Tokyo (JP)**

(74) Representative: **Weser, Wolfgang
Weser & Kollegen
Patentanwälte
Radeckestrasse 43
81245 München (DE)**

(56) References cited:
**US-A1- 2007 189 341    US-A1- 2007 273 863
US-A1- 2011 205 523**

• **YANG ET AL: "High-precision absolute distance
measurement using dual-laser frequency
scanned interferometry under realistic
conditions", NUCLEAR INSTRUMENTS &
METHODS IN PHYSICS RESEARCH. SECTION A:
ACCELERATORS, SPECTROMETERS,
DETECTORS, AND ASSOCIATED EQUIPMENT,
ELSEVIER BV * NORTH-HOLLAND,
NETHERLANDS, vol. 575, no. 3, 5 May 2007
(2007-05-05), pages 395-401, XP022062228, ISSN:
0168-9002, DOI: 10.1016/J.NIMA.2007.02.101**
• **SEIICHI KAKUMA ET AL: "Frequency scanning
interferometry immune to length drift using a pair
of vertical-cavity surface-emitting laser diodes",
OPTICAL REVIEW, vol. 19, no. 6, 1 November 2012
(2012-11-01), pages 376-380, XP55051807, ISSN:
1340-6000, DOI: 10.1007/s10043-012-0061-3**

**Description**

BACKGROUND OF THE INVENTION

Field of the Invention

The present invention relates to a measurement apparatus which measures the distance between a reference surface and a test surface.

Description of the Related Art

A frequency (wavelength) scanning interferometer and fixed-wavelength interferometer are known as measurement apparatuses which measure the distance between a reference surface and a test surface (object surface). The frequency scanning interferometer obtains the distance between a reference surface and a test surface, based on the frequency of an interference signal obtained by temporally scanning the frequency of a light source. The frequency scanning interferometer is advantageously simpler in arrangement and lower in cost than the fixed-wavelength light wave interferometer typified by a heterodyne interferometer or homodyne interferometer.

The frequency scanning interferometer requires a measurement condition that the optical path length difference between reference beam (beam reflected by the reference surface) and object beam (beam reflected by the test surface) does not change while scanning the frequency. Even a small change of the optical path length difference leads to a large measurement error. For example, when the center wavelength of the light source is 780 nm, the scanning amount of the frequency of the light source is 100 GHz (0.2 nm), and the optical path length difference changes by 1 nm while scanning the frequency, a measurement error of about 3.8 $\mu$m is generated. The optical path length difference inevitably changes owing to vibrations, temperature change, and the like. To prevent this, techniques for reducing a measurement error arising from a change of the optical path length difference between reference beam and object beam are proposed in Japanese Patent Laid-Open No. 7-120211, US 2011/205523 A1, US 2007/189341 A1, and "Hai-Jun Yang and Keith Riles, High-precision absolute distance measurement using dual-laser frequency scanned interferometry under realistic conditions, Nuclear Instruments & Methods in Physics Research, Section A, Volume 575, Issue 3, 1 June 2007, pages 395 - 401 (literature 1)".

Japanese Patent Laid-Open No. 7-120211 discloses a technique in which calculation processing is performed based on the phase difference between the beat signals of interference signals using two light sources (frequency scanning light sources) different in center wavelength, thereby reducing a measurement error arising from a change of the optical path length difference between reference beam and object beam. Literature 1 discloses a technique in which the average value of measurement values obtained from two interference signals is calculated using two frequency scanning light sources different in direction in which the frequency is scanned, thereby reducing a measurement error arising from a change of the optical path length difference between reference beam and object beam.

However, the technique in Japanese Patent Laid-Open No. 7-120211 requires two detectors to detect the interference signals of the two light sources, thereby increasing the apparatus cost. In particular, when measuring the shape of an object, a two-dimensional sensor such as a CCD or CMOS is used as the detector, greatly increasing the apparatus cost.

In the technique in literature 1, one detector detects the interference signals of the two light sources. For this purpose, this technique requires a chopper for temporally switching an interference signal to be detected by the detector, increasing the apparatus cost.

SUMMARY OF THE INVENTION

The present invention provides a technique which reduces a measurement error arising from a change of the optical path length difference between a reference surface and a test surface while suppressing an increase in cost, and is advantageous to measurement of the distance between the reference surface and the test surface.

The present invention in its first aspect provides a measurement apparatus as specified in claims 1 to 4.

Further aspects of the present invention will become apparent from the following description of exemplary embodiments with reference to the attached drawings.

BRIEF DESCRIPTION OF THE DRAWINGS

Fig. 1 is a view showing the arrangement of a measurement apparatus in the first embodiment of the present invention.

Fig. 2 is a view exemplifying an interference signal obtained by the detector of the measurement apparatus shown in Fig. 1.

Fig. 3 is a graph exemplifying the result of frequency analysis of the interference signal shown in Fig. 2.

Fig. 4 is a flowchart for explaining processing of measuring the distance between a reference surface and a test surface in the measurement apparatus shown in Fig. 1.

Fig. 5 is a view showing the arrangement of a measurement apparatus in the second embodiment of the present invention.

Fig. 6 is a flowchart for explaining processing of measuring the distance between a reference surface and a test surface in the measurement apparatus shown in Fig. 5.

DESCRIPTION OF THE EMBODIMENTS

Preferred embodiments of the present invention will be described below with reference to the accompanying drawings. Note that the same reference numerals denote the same members throughout the drawings, and a repetitive description thereof will not be given.

<First Embodiment>

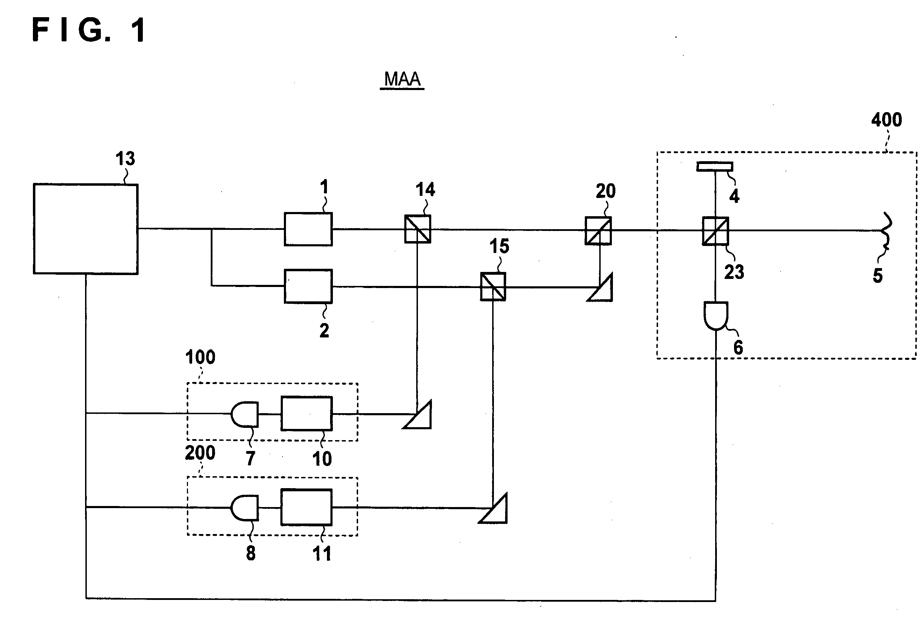

Fig. 1 is a view showing the arrangement of a measurement apparatus MAA in the first embodiment of the present invention. The measurement apparatus MAA is an interferometer which measures the distance between a reference surface and a test surface. The measurement apparatus MAA includes a first light source 1, a second light source 2, a processing unit 13, non-polarization beam splitters 14, 15, and 20, wavelength measurement units 100 and 200, and an interferometer unit 400. The wavelength measurement unit 100 includes a Fabry-Perot etalon 10 and detector 7. The wavelength measurement unit 200 includes a Fabry-Perot etalon 11 and detector 8. The interferometer unit 400 includes a non-polarization beam splitter 23 and detector 6.

In the embodiment, the measurement apparatus MAA includes two light sources (first light source 1 and second light source 2) capable of scanning the frequency of emitted light, but is not limited to this. For example, the measurement apparatus MAA may include three or more light sources capable of scanning the frequency of emitted light.

Beam L1 emitted by the first light source 1 is split into two by the non-polarization beam splitter 14. One beam is guided to the wavelength measurement unit 100, and the other beam is guided to the interferometer unit 400. Beam L2 emitted by the second light source 2 is split into two by the non-polarization beam splitter 15. One beam is guided to the wavelength measurement unit 200, and the other beam is guided to the interferometer unit 400.

The beam L1 entering the wavelength measurement unit 100 passes through the Fabry-Perot etalon 10 serving as a wavelength reference element, and enters the detector 7. The processing unit 13 controls the frequency (wavelength) of light emitted by the first light source 1 based on a light intensity (intensity of the beam L1) detected by the detector 7. Similarly, the beam L2 entering the wavelength measurement unit 200 passes through the Fabry-Perot etalon 11 serving as a wavelength reference element, and enters the detector 8. The processing unit 13 controls the frequency (wavelength) of light emitted by the second light source 2 based on a light intensity (intensity of the beam L2) detected by the detector 8.

As for the transmission spectra of the Fabry-Perot etalons 10 and 11, the relative values of the peaks of the respective transmission spectra need to be ensured. Thus, the embodiment adopts, as the Fabry-Perot etalons 10 and 11, vacuum gap etalons with an ensured transmission spectrum interval. The vacuum gap etalon can easily ensure the relative value of a wavelength because it has neither the refractive index nor dispersion of the internal medium. When the etalon is made of a low thermal expansion glass or the like, expansion with respect to the temperature can be reduced, implementing a wavelength reference element which is stable for a long period of time. However, the Fabry-Perot etalons 10 and 11 are not limited to the vacuum gap etalons, and may be air gap etalons or solid etalons. In this case, the internal refractive index and dispersion need to be ensured by, for example, measuring the temperature of the etalon. Each of the Fabry-Perot etalons 10 and 11 has at least two transmission spectra within the scanning range of the frequency of light from each of the first light source 1 and second light source 2. Accordingly, while scanning the frequencies of light from the first light source 1 and light from the second light source 2, a wavelength at each time can be ensured.

The non-polarization beam splitter 20 merges the beam L1 and beam L2 guided to the interferometer unit 400. The beam L1 entering the interferometer unit 400 is split by the non-polarization beam splitter 23 into the first reference beam which enters a reference surface 4 and the first object beam which enters a test surface 5. The first reference beam is reflected by the reference surface 4, and returns to the non-polarization beam splitter 23. The first object beam is reflected by the test surface 5, and returns to the non-polarization beam splitter 23. Similarly, the beam L2 entering the interferometer unit 400 is split by the non-polarization beam splitter 23 into the second reference beam which enters the reference surface 4 and the second object beam which enters the test surface 5. The second reference beam is reflected by the reference surface 4, and returns to the non-polarization beam splitter 23. The second object beam is reflected by the test surface 5, and returns to the non-polarization beam splitter 23. In this way, the non-polarization beam splitter 23 functions as a splitting element which splits beam from the first light source 1 into the first beam and second beam, splits beam from the second light source 2 into the third beam and fourth beam, guides the first beam and third beam to enter the reference surface 4, and guides the second beam and fourth beam to enter the test surface 5.

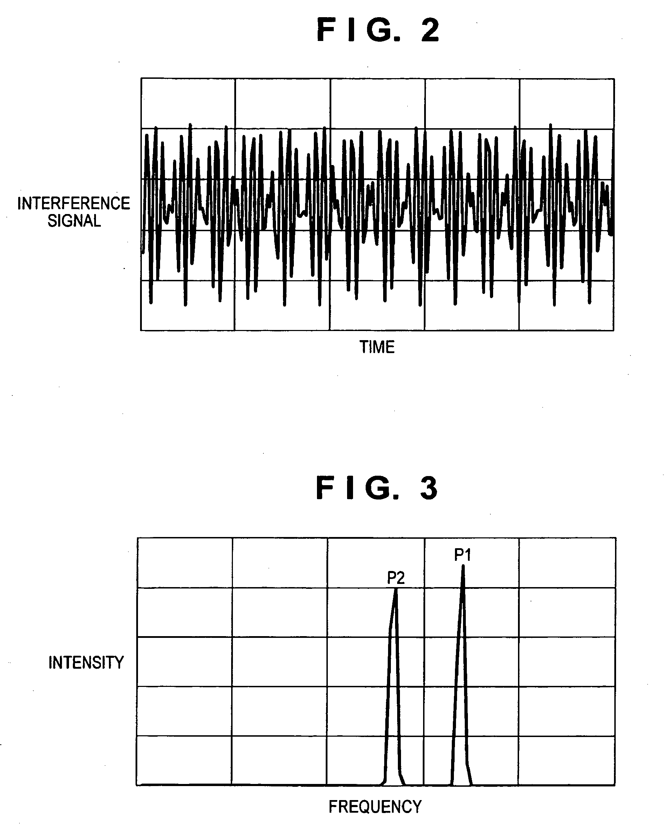

The first reference beam and first object beam, and the second reference beam and second object beam are merged by the non-polarization beam splitter 23, respectively, and enter the detector 6. The detector 6 detects beam containing the first interference beam formed by interference of the first reference beam and first object beam, and the second interference beam formed by interference of the second reference beam and second object beam (detects the first interference beam and second interference beam at once), and outputs (obtains) an interference signal S12 as shown in Fig. 2. The interference signal S12 is a signal obtained by adding an interference signal (first signal) S1 (corresponding to the first interference beam) generated by beam from the first light source 1, and an interference signal (second signal) S2 (corresponding to the second interference beam) generated by beam from the second light source 2. The interference signals S1, S2, and S12 are given by equations (1), (2), and (3), respectively:

$$S1(t) = A_1{}^2 + B_1{}^2 + A_1 B_1 \cos\left(\frac{4\pi L f_1(t)}{c}\right) \qquad \ldots (1)$$

$$S2(t) = A_2{}^2 + B_2{}^2 + A_2 B_2 \cos\left(\frac{4\pi L f_2(t)}{c}\right) \qquad \ldots (2)$$

$$S12(t) = S1(t) + S2(t) \qquad \ldots (3)$$

where $A_1$ is the amplitude of the first reference beam, $A_2$ is the amplitude of the second reference beam, $B_1$ is the amplitude of the first object beam, and $B_2$ is the amplitude of the second object beam. $f_1(t)$ is the frequency of light from the first light source 1 at time t, $f_2(t)$ is the frequency of light from the second light source 2 at time t, and L is the distance between the reference surface 4 and the test surface 5. Note that the refractive index of the space is 1, and there is no dispersion.

Here, detecting the first interference beam and the second interference beam at once by the detector 6 may include detecting that with which each interference beam has completely overlapped and detecting that with which each interference beam has partially overlapped. By detecting the overlapped interference beams, the distance between the reference surface and the test surface is obtained by using the plurality of interfere beams detected at once.

In the embodiment, VCSEL (Vertical Cavity Surface Emitting Laser) are used as the first light source 1 and second light source 2. The center frequency $fc_1$ of light from the first light source 1 and the center frequency $fc_2$ of light from the second light source 2 are $fc_1$ = 448 [THz] and $fc_2$ = 353 [THz], respectively.

When obtaining the distance between the reference surface 4 and the test surface 5, the processing unit 13 controls the first light source 1 and second light source 2. The processing unit 13 controls the first light source 1 to scan the frequency of light from the first light source 1 in the first direction at the first scanning speed. Also, the processing unit 13 controls the second light source 2 to scan the frequency of light from the second light source 2 in the second direction opposite to the first direction at the second scanning speed different from the first scanning speed. In other words, the processing unit 13 controls the first light source 1 and second light source 2 so that the directions in which the frequencies of light from the first light source 1 and light from the second light source 2 are scanned become different from each other, and the absolute values of the scanning speeds of the frequencies become different from each other. In the embodiment, the processing unit 13 controls the first light source 1 to scan the frequency of light from the first light source 1 at a scanning speed $fv_1$ = 100 [GHz/sec] (forward direction). The processing unit 13 controls the second light source 2 to scan the frequency of light from the second light source 2 at a scanning speed $fv_2$ = -79 [GHz/sec] (backward direction). When the measurement apparatus includes n (n = an integer of 3 or more) light sources capable of scanning the frequency, the processing unit 13 controls even the third light source different from the first and second light sources. More specifically, the processing unit 13 scans the frequency of light from the third light source at the third scanning speed different from the first and second scanning speeds in the first or second direction.

The processing unit 13 desirably controls n light sources to satisfy equation (4) for n (n = integer of 2 or more) light sources of the measurement apparatus MAA:

$$\sum \frac{fc_i}{fv_i} = 0 \qquad \qquad \cdots (4)$$

where $fc_i$ (i = an integer of 1 to n) is the center frequency of light from each of the n light sources, and $fv_i$ (i = an integer of 1 to n) is the scanning speed of the frequency of light from each of the n light sources.

In the embodiment, the first light source 1 and second light source 2 are controlled so that the absolute values of the scanning speeds of the frequencies of light from the first light source 1 and light from the second light source 2 become different from each other. By performing frequency analysis (for example, Fourier transform) for the interference signal S12 (see Fig. 2) output from the detector 6, the peak frequency P1 of the interference signal S1 and the peak frequency P2 of the interference signal S2 can be separated, as shown in Fig. 3. Note that the difference (speed difference) between the absolute values of the scanning speeds of the frequencies of light from the first light source 1 and light from the second light source 2 needs to be a speed difference capable of separating the peak frequencies P1 and P2. For example, the difference (frequency difference) between the peak frequencies P1 and P2 is set to be larger than the half frequency width.

In the embodiment, the first light source 1 and second light source 2 are controlled to satisfy equation (4). When the optical path length between the reference surface 4 and the test surface 5 does not change while scanning the frequencies of light from the first light source 1 and light from the second light source 2, the phase $\phi$ of the interference signal can be given by equation (5), as is apparent from equation (1) :

$$\phi(t) = \frac{4\pi L f(t)}{c} \qquad \qquad \cdots (5)$$

Temporal differentiation of the phase $\phi$ of the interference signal yields the frequency $v$ of the interference signal. The frequency $v$ of the interference signal can be given by equation (6):

$$v = \frac{d\phi(t)}{dt} = \frac{4\pi L f_v}{c} \qquad \qquad \cdots (6)$$

where $f_v$ is the scanning speed of the frequency. As represented by equation (6), the frequency $v$ of the interference signal depends on only the distance L between the reference surface 4 and the test surface 5. By performing frequency analysis (for example, Fourier transform) for an interference signal output from the detector 6, the distance L between the reference surface 4 and the test surface 5 can be calculated from equation (7):

$$L = \frac{c}{4\pi f_v} v \qquad \qquad \cdots (7)$$

To the contrary, when the optical path length between the reference surface 4 and the test surface 5 changes while scanning the frequencies of light from the first light source 1 and light from the second light source 2, the phase $\phi'$ of the interference signal is given not by equation (7), but by equation (8):

$$\phi'(t) = \frac{4\pi(L + L_v \cdot t)f(t)}{c} \qquad \qquad \cdots (8)$$

In this case, a change of the optical path length between the reference surface 4 and the test surface 5 is regarded as a linear change in one direction, and $L_v$ is the speed of the change.

As described above, temporal differentiation of the phase $\phi'$ of the interference signal yields the frequency $v'$ of the interference signal. The frequency $v'$ of the interference signal can be given by equation (9):

$$v' \approx v + \frac{4\pi L_v f_c}{c} \qquad \ldots (9)$$

where $f_c$ is the center frequency of light from the light source.

Thus, when the optical path length between the reference surface 4 and the test surface 5 changes while scanning the frequencies of light from the first light source 1 and light from the second light source 2, the distance L' between the reference surface 4 and the test surface 5 is given by equation (10):

$$L' = L + \frac{f_c}{f_v} L_v \qquad \ldots (10)$$

As represented by equation (10), when the optical path length between the reference surface 4 and the test surface 5 changes while scanning the frequencies of light from the first light source 1 and light from the second light source 2, a measurement error is generated by the product obtained by multiplying the change speed $L_v$ of the optical path length by $f_c/f_v$. However, when the measurement apparatus uses n light sources, if the center frequency $fc_i$ of light from each light source and the scanning speed $fv_i$ of the frequency satisfy equation (4), a measurement error arising from a change of the optical path length can be reduced (removed) by averaging measurement values obtained from the respective light sources.

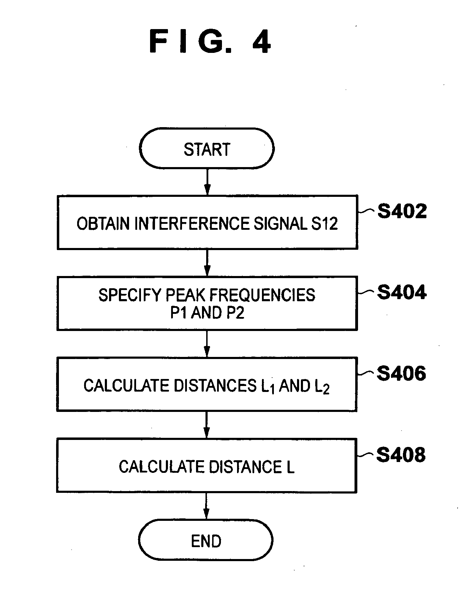

Processing of measuring the distance between the reference surface 4 and the test surface 5 in the measurement apparatus MAA will be explained with reference to Fig. 4. This processing is executed by executively controlling the respective units of the measurement apparatus MAA by the processing unit 13. The processing unit 13 includes a CPU and memory for controlling the overall arrangement (operation) of the measurement apparatus MAA.

In step S402, the processing unit 13 obtains the interference signal S12 (see Fig. 2) serving as a signal obtained by adding the interference signal S1 generated by beam from the first light source 1, and the interference signal S2 generated by beam from the second light source 2. More specifically, the processing unit 13 controls the first light source 1 and second light source 2 to scan the frequencies of light from the first light source 1 and light from the second light source 2 at the scanning speeds $fv_1 = 100$ [GHz/sec] and $fv_2 = -79$ [GHz/sec]. While scanning the frequencies of light from the first light source 1 and light from the second light source 2, the processing unit 13 controls the detector 6 to detect beam containing the first interference beam and second interference beam, obtaining the interference signal S12.

In step S404, the processing unit 13 specifies the peak frequency P1 of the interference signal S1 and the peak frequency P2 of the interference signal S2. More specifically, the processing unit 13 performs Fourier transform for the interference signal S12 obtained in step S402 to separate it into the interference signals S1 and S2. Then, the processing unit 13 specifies the peak frequencies P1 and P2 of the interference signals S1 and S2 (see Fig. 3).

In step S406, the processing unit 13 calculates the distance $L_1$ between the reference surface 4 and the test surface 5 that corresponds to the interference signal S1, and the distance $L_2$ between the reference surface 4 and the test surface 5 that corresponds to the interference signal S2. More specifically, the processing unit 13 calculates the distance $L_1$ corresponding to the interference signal S1 and the distance $L_2$ corresponding to the interference signal S2 in accordance with equation (7) based on the peak frequencies P1 and P2 specified in step S404.

In step S408, the processing unit 13 calculates the distance L between the reference surface 4 and the test surface 5, based on the distances $L_1$ and $L_2$ calculated in step S406. More specifically, the processing unit 13 calculates, as the distance L between the reference surface 4 and the test surface 5, a distance obtained by averaging the distance $L_1$ corresponding to the interference signal S1 and the distance $L_2$ corresponding to the interference signal S2.

In this manner, even when the optical path length between the reference surface and the test surface changes while scanning the frequency of light from each light source, the measurement apparatus MAA can reduce a measurement error arising from the change of the optical path length, and measure the distance between the reference surface and the test surface at high precision. The measurement apparatus MAA requires neither a plurality of detectors for obtaining interference signals corresponding to respective light sources, nor a chopper for temporally switching an interference signal to be obtained by a detector. Therefore, the measurement apparatus MAA can suppress an increase in apparatus cost.

In the first embodiment, the measurement apparatus MAA measures the distance between the reference surface 4 and the test surface 5. However, the measurement apparatus MAA can also measure the shape of the test surface 5. In this case, the detector 6 is configured to include a plurality of detection regions where beam containing the first interference beam and second interference beam is detected at respective positions on the test surface 5. The processing unit 13 obtains distances between the reference surface 4 and the test surface 5 at respective positions based on interference signals output from the respective detection regions. As a result, the processing unit 13 can obtain the shape of the test surface 5. When the detector 6 cannot be configured to include a plurality of detection regions, the shape of the test surface 5 can be obtained by changing the positional relationship between the test surface 5 and the detector 6, and obtaining distances between the reference surface 4 and the test surface 5 for respective position relationships.

<Second Embodiment>

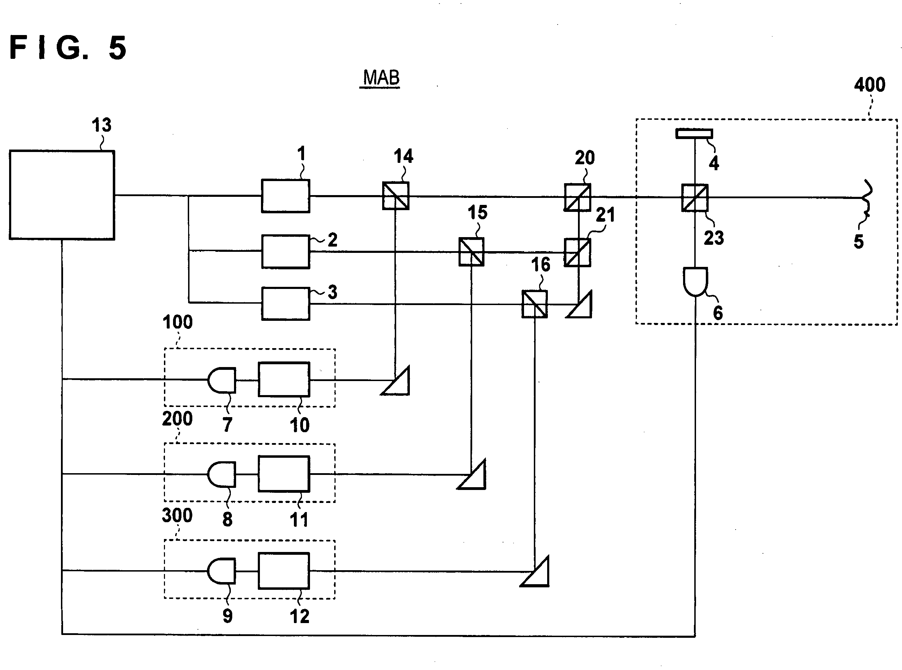

Fig. 5 is a view showing the arrangement of a measurement apparatus MAB in the second embodiment of the present invention. The measurement apparatus MAB is an interferometer which measures the distance between a reference surface and a test surface. In addition to the arrangement of the measurement apparatus MAA, the measurement apparatus MAB further includes a third light source 3, non-polarization beam splitters 16 and 21, and a wavelength measurement unit 300. The wavelength measurement unit 300 includes a Fabry-Perot etalon 12 and detector 9.

In the embodiment, the measurement apparatus MAB includes three light sources (a first light source 1, a second light source 2, and the third light source 3) capable of scanning the frequency of emitted light, but is not limited to this. For example, the number of light sources may be increased or decreased in accordance with a precision requested of measurement of the distance between a reference surface 4 and a test surface 5.

Beam L3 emitted by the third light source 3 is split into two by the non-polarization beam splitter 16. One beam is guided to the wavelength measurement unit 300, and the other beam is guided to an interferometer unit 400.

The beam L3 entering the wavelength measurement unit 300 passes through the Fabry-Perot etalon 12 serving as a wavelength reference element, and enters the detector 9. A processing unit 13 controls the frequency (wavelength) of light emitted by the third light source 3 based on a light intensity (intensity of the beam L3) detected by the detector 9. Note that the arrangement of the Fabry-Perot etalon 12 is the same as those of Fabry-Perot etalons 10 and 11, and a detailed description thereof will not be repeated.

A non-polarization beam splitter 20 and the non-polarization beam splitter 21 merge beam L1, beam L2, and beam L3 guided to the interferometer unit 400. The beam L3 entering the interferometer unit 400 is split by a non-polarization beam splitter 23 into the third reference beam which enters the reference surface 4 and the third object beam which enters the test surface 5. The third reference beam is reflected by the reference surface 4, and returns to the non-polarization beam splitter 23. The third object beam is reflected by the test surface 5, and returns to the non-polarization beam splitter 23.

The first reference beam and first object beam, the second reference beam and second object beam, and the third reference beam and third object beam are merged by the non-polarization beam splitter 23, respectively, and enter a detector 6. The detector 6 detects beam containing the first interference beam of the first reference beam and first object beam, the second interference beam of the second reference beam and second object beam, and the third interference beam of the third reference beam and third object beam (detects the first interference beam, second interference beam, and third interference beam at once), and outputs an interference signal S123. The interference signal S123 is a signal obtained by adding an interference signal S1 (corresponding to the first interference beam) generated by beam from the first light source 1, an interference signal S2 (corresponding to the second interference beam) generated by beam from the second light source 2, and an interference signal S3 (corresponding to the third interference beam) generated by beam from the third light source 3.

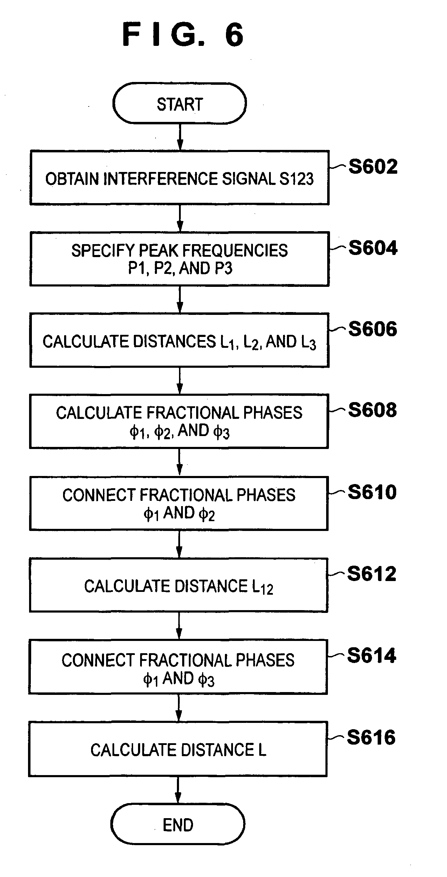

Processing of measuring the distance between the reference surface 4 and the test surface 5 in the measurement apparatus MAB will be explained with reference to Fig. 6. This processing is executed by executively controlling the respective units of the measurement apparatus MAB by the processing unit 13.

In step S602, the processing unit 13 obtains the interference signal S123 serving as a signal obtained by adding the interference signal S1 generated by beam from the first light source 1, the interference signal S2 generated by beam from the second light source 2, and the interference signal S3 generated by beam from the third light source 3. At this time, the processing unit 13 controls the first light source 1, second light source 2, and third light source 3 to satisfy equation (4). More specifically, in the embodiment, the frequencies of light from the first light source 1, light from the second light source 2, and light from the third light source 3 are scanned at the scanning speeds $f\nu_1$ = 100 [GHz/sec] (forward direction), $f\nu_2$ = 80 [GHz/sec] (forward direction), and $f\nu_3$ = -49 [GHz/sec] (backward direction). The center frequency $fc_1$ of light from the first light source 1, the center frequency $fc_2$ of light from the second light source 2, and the center frequency $fc_3$ of light from the third light source 3 are $fc_1$ = 380 [THz], $fc_2$ = 382 [THz], and $fc_3$ = 420 [THz], respectively. In the embodiment, the measurement time is 1 sec. The frequency scanning amounts $\Delta f_1$, $\Delta f_2$, and $\Delta f_3$ of the first, second, and third light sources 1, 2, and 3 are $\Delta f_1$ = 100 [GHz], $\Delta f_2$ = 80 [GHz], and $\Delta f_3$ = -49 [GHz], respectively.

In step S604, the processing unit 13 specifies the peak frequency P1 of the interference signal S1, the peak frequency P2 of the interference signal S2, and the peak frequency P3 of the interference signal S3. More specifically, the processing unit 13 performs Fourier transform for the interference signal S123 obtained in step S602 to separate it into the interference signals S1, S2, and S3. Then, the processing unit 13 specifies the peak frequencies P1, P2, and P3 of the interference signals S1, S2, and S3.

In step S606, the processing unit 13 calculates the distance $L_1$ between the reference surface 4 and the test surface 5 that corresponds to the interference signal S1, the distance $L_2$ between the reference surface 4 and the test surface 5 that corresponds to the interference signal S2, and the distance $L_3$ between the reference surface 4 and the test surface 5 that corresponds to the interference signal S3. More specifically, the processing unit 13 calculates the distance $L_1$ corresponding to the interference signal S1, the distance $L_2$ corresponding to the interference signal S2, and the distance $L_3$ corresponding to the interference signal S3 in accordance with equation (7) based on the peak frequencies P1, P2, and P3 specified in step S604.

In step S608, the processing unit 13 calculates fractional phases $\phi_1$, $\phi_2$, and $\phi_3$ at the center frequencies $fc_1$, $fc_2$, and $fc_3$ of the first, second, and third light sources 1, 2, and 3 based on the distances $L_1$, $L_2$, and $L_3$ calculated in step S606. More specifically, the processing unit 13 calculates the fractional phase $\phi$ using discrete Fourier transform (DFT), as represented by equation (11):

$$\phi_i = \tan^{-1} \frac{\sum_j S_i(j)\sin\left\{\frac{4\pi L_i}{c}(j - fc_i)\right\}}{\sum_j S_i(j)\cos\left\{\frac{4\pi L_i}{c}(j - fc_i)\right\}} \quad \text{(i = 1 to 3)} \qquad ...(11)$$

Note that the fractional phase $\phi$ is calculated from equation (11) only within the range of $\pm\pi$, and the interference order is unknown.

In step S610, the processing unit 13 connects the fractional phases $\phi_1$ and $\phi_2$ based on the average value $L_{ave}$ of the distances $L_1$, $L_2$, and $L_3$ calculated in step S606 (phase connection). More specifically, the processing unit 13 calculates the interference order difference $M_{12}$ between the interference signal S1 at the center frequency $fc_1$ of the first light source 1 and the interference signal S2 at the center frequency $fc_2$ of the second light source 2 in accordance with equation (12):

$$M_{12} = round\left\{\frac{\frac{4\pi L_{ave}(fc_2 - fc_1)}{c} - (\phi_2 - \phi_1)}{2\pi}\right\} \qquad ...(12)$$

where round() is a function of rounding an argument to an integer. Since $L_{ave}$ is the average value of the distances $L_1$, $L_2$, and $L_3$, a measurement error arising from a change of the optical path length between the reference surface 4 and the test surface 5 is reduced (removed). Therefore, even when the optical path length between the reference surface 4 and the surface 5 to be measured changes while scanning the frequencies of light from the first light source 1, light from the second light source 2, and light from the third light source 3, the interference order difference $M_{12}$ can be calculated at high precision.

In step S612, the processing unit 13 calculates the distance $L_{12}$ between the reference surface 4 and the test surface 5 that corresponds to (an interference signal obtained from) the synthetic wavelength of light from the first light source 1 and light from the second light source 2. More specifically, the processing unit 13 calculates the distance $L_{12}$ from equation (13) using the center frequencies $fc_1$ and $fc_2$, the fractional phases $\phi_1$ and $\phi_2$, and the interference order difference $M_{12}$:

$$L_{12} = \frac{c}{4\pi} \cdot \frac{2\pi M_{12} + \phi_2 - \phi_1}{fc_2 - fc_1} \qquad ...(13)$$

The distance $L_{12}$ corresponds to the result of measurement at a frequency scanning amount corresponding to the frequency difference between the center frequency $fc_1$ of the first light source 1 and the center frequency $fc_2$ of the second light source 2. The distance $L_{12}$ improves to a precision of 1/20 (= $\Delta f_1/(fc_2 - fc_1)$), compared to the distance $L_1$.

In step S614, the processing unit 13 connects the fractional phases $\phi_1$ and $\phi_3$ based on the distance $L_{12}$ calculated in step S612 (phase connection). More specifically, the processing unit 13 calculates the interference order difference $M_{13}$ between the interference signal S1 at the center frequency $fc_1$ of the first light source 1 and the interference signal S3 at the center frequency $fc_3$ of the third light source 3 in accordance with equation (14):

$$M_{13} = round\left\{ \frac{\dfrac{4\pi L_{12}(fc_3 - fc_1)}{c} - (\phi_3 - \phi_1)}{2\pi} \right\} \qquad \ldots (14)$$

In step S616, the processing unit 13 calculates the distance L between the reference surface 4 and the test surface 5. The processing unit 13 calculates, as the distance L, the distance $L_{13}$ between the reference surface 4 and the test surface 5 that corresponds to (an interference signal obtained from) the synthetic wavelength of light from the first light source 1 and light from the third light source 3. More specifically, the processing unit 13 calculates the distance $L_{13}$ from equation (15) using the center frequencies $fc_1$ and $fc_3$, the fractional phases $\phi_1$ and $\phi_3$, and the interference order difference $M_{13}$:

$$L_{13} = \frac{c}{4\pi} \cdot \frac{2\pi M_{13} + \phi_3 - \phi_1}{fc_3 - fc_1} \qquad \ldots (15)$$

The distance $L_{13}$ corresponds to the result of measurement at a frequency scanning amount corresponding to the frequency difference between the center frequency $fc_1$ of the first light source 1 and the center frequency $fc_3$ of the third light source 3. The distance $L_{13}$ improves to a precision of 1/400 (= $(fc_2 - fc_1)/(fc_3 - fc_1)$), compared to the distance $L_1$.

In this fashion, even when the optical path length between the reference surface and the test surface changes while scanning the frequency of light from each light source, the measurement apparatus MAB can reduce a measurement error arising from the change of the optical path length, and obtain an interference order difference at high precision. By using the interference order difference, the measurement apparatus MAB can measure the distance between the reference surface and the test surface at high precision. The measurement apparatus MAB requires neither a plurality of detectors for obtaining interference signals corresponding to respective light sources, nor a chopper for temporally switching an interference signal to be obtained by a detector. The measurement apparatus MAB can suppress an increase in apparatus cost. Similar to the measurement apparatus MAA, the measurement apparatus MAB can measure not only the distance between the reference surface and the test surface, but also the shape of the test surface.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

**Claims**

1. A measurement apparatus configured to measure a distance between a reference surface (4) and a test surface (5), comprising:

   n, n with an integer not smaller than 2, frequency scanning light sources (1, 2);
   a splitting element(23) configured to split a beam from each of the n frequency scanning light sources to enter the reference surface and the test surface;
   a detector (6) configured to detect n interference beams at once, formed by interference of beams reflected by the reference surface and beams reflected by the test surface, and output an interference signal; and
   a processing unit (13) configured to perform processing of obtaining the distance,
   wherein the processing unit is configured to control to scan a frequency of light from a first light source (1) out of the n frequency scanning light sources in a first direction at a first scanning speed, and to control to scan a frequency of light from a second light source (2) different from the first light source, out of the n frequency scanning light sources, in a second direction opposite to the first direction at a second scanning speed different from the first scanning speed, and
   the processing unit is configured to obtain the distance by separating the interference signal including detection results of the n interference beams, output from the detector, into n signals corresponding to the n interference signals and processing the n signals while controlling the n frequency scanning light sources **characterized in that**

the processing unit is configured to control the n frequency scanning light sources to satisfy

$$\sum \frac{fc_i}{fv_i} = 0$$

wherein $fc_i$, with i an integer of 1 to n, is a center frequency of light from each of the n frequency scanning light sources, and $fv_i$, with i an integer of 1 to n, is a scanning speed of a frequency of light from each of the n frequency scanning light sources.

2. The apparatus according to claim 1, wherein
the measurement apparatus comprises n, with n an integer not smaller than 3, frequency scanning light sources, and
the processing unit is configured to control to scan a frequency of light from a third light source (3) different from the first light source and the second light source in one of the first direction and the second direction at a third scanning speed different from the first scanning speed and the second scanning speed.

3. The apparatus according to claim 1, wherein
the processing unit is configured to perform frequency analysis for the interference signal output from the detector to separate the interference signal into the n signals corresponding to the n interference beams, and
the processing unit is configured to obtain, as the distance, a distance obtained by averaging distances between the reference surface and the test surface that are calculated from n peak frequencies corresponding to the n signals obtained by the frequency analysis.

4. The apparatus according to any one of claims 1 to 3, wherein
the detector includes a plurality of detection regions where a beam containing n interference beams is detected at a plurality of positions on the test surface, and
the processing unit is configured to obtain a shape of the test surface by obtaining distances at the plurality of positions based on interference signals output from the respective detection regions.

**Patentansprüche**

1. Messvorrichtung, konfiguriert zum Messen einer Entfernung zwischen einer Referenzfläche (4) und einer Testfläche (5), umfassend:

n Frequenzscan-Lichtquellen (1, 2), wobei n eine ganze Zahl nicht kleiner als 2 ist;
ein Teilelement (23), konfiguriert zum Teilen eines Strahlbündels von jeder der n Frequenzscan-Lichtquellen, um die Referenzfläche und die Testfläche zu erfassen;
einen Detektor (6), konfiguriert zum Nachweisen von n Interferenzstrahlen zugleich, gebildet durch Interferenz von an der Referenzfläche reflektierten Lichtbündeln und an der Testfläche reflektierten Lichtbündeln, sowie zum Ausgeben eines Interferenzsignals; und
eine Verarbeitungseinheit (13), konfiguriert zum Ausführen einer Verarbeitung, um die Entfernung zu erhalten, wobei die Verarbeitungseinheit konfiguriert ist, um das Scannen einer Frequenz von Licht aus einer ersten Lichtquelle (1), aus den n Frequenzscan-Lichtquellen, in eine erste Richtung mit einer ersten Scangeschwindigkeit zu steuern, und um das Scannen einer Frequenz von Licht aus einer zweiten, von der ersten verschiedenen Lichtquelle (2), aus den n Frequenzscan-Lichtquellen, in eine zweite, zur ersten entgegengesetzte Richtung mit einer zweiten, von der ersten verschiedenen Scangeschwindigkeit zu steuern, und
die Verarbeitungseinheit konfiguriert ist, um die Entfernung zu erhalten durch Trennen des vom Detektor ausgegebenen Interferenzsignals, welches Nachweisergebnisse der n Interferenzstrahlen enthält, in n Signale entsprechend den n Interferenzsignalen, und Verarbeiten der n Signale während des Steuerns der n Frequenzscan-Lichtquellen,
**dadurch gekennzeichnet, dass**
die Verarbeitungseinheit konfiguriert ist, um die n Frequenzscan-Lichtquellen so zu steuern, dass sie Folgendes erfüllen

$$\sum \frac{fc_i}{fv_i} = 0$$

,

wobei fCi, mit i als ganzer Zahl von 1 bis n, eine Zentralfrequenz von Licht aus jeder der n Frequenzscan-Lichtquellen ist, und fvi, mit i als ganzer Zahl von 1 bis n, eine Scangeschwindigkeit von Licht aus jeder der n Frequenzscan-Lichtquellen ist.

2. Vorrichtung nach Anspruch 1, wobei
die Messvorrichtung n Frequenzscan-Lichtquellen umfasst, wobei n eine ganze Zahl nicht kleiner als 3 ist, und
die Verarbeitungseinheit konfiguriert ist, um das Scannen einer Frequenz von Licht aus einer dritten, von der ersten und der zweiten verschiedenen Lichtquelle (3) in der ersten oder der zweiten Richtung mit einer dritten, von der ersten und der zweiten verschiedenen Scangeschwindigkeit zu steuern.

3. Vorrichtung nach Anspruch 1, wobei
die Verarbeitungseinheit konfiguriert ist, um eine Frequenzanalyse für das vom Detektor ausgegebene Interferenzsignal durchzuführen, um das Interferenzsignal in die n Signale entsprechend den n Interferenzstrahlen zu trennen, und
die Verarbeitungseinheit konfiguriert ist, um eine durch Mittelung von aus n Peak-Frequenzen - entsprechend den durch die Frequenzanalyse erhaltenen n Signalen - berechneten Entfernungen zwischen der Referenzfläche und der Testfläche erhaltene Entfernung als die Entfernung zu erhalten.

4. Vorrichtung nach einem der Ansprüche 1 bis 3, wobei
der Detektor mehrere Nachweisbereiche enthält, wodurch ein Strahlbündel, das n Interferenzstrahlen beinhaltet, an mehreren Positionen der Testfläche nachgewiesen wird, und
die Verarbeitungseinheit konfiguriert ist, um eine Form der Testoberfläche durch Erhalt von Entfernungen an den mehreren Positionen zu erhalten, basierend auf von den entsprechenden Nachweisbereichen ausgegebenen Interferenzsignalen.

**Revendications**

1. Appareil de mesure configuré pour mesurer une distance entre une surface de référence (4) et une surface de test (5), comprenant :

n sources de lumière à balayage de fréquence (1, 2), où n est un entier non inférieur à 2 ;
un élément séparateur (23) configuré pour séparer un faisceau provenant de chacune des n sources de lumière à balayage de fréquence pour qu'il pénètre à travers la surface de référence et la surface de test ;
un détecteur (6) configuré pour détecter en une seule fois n faisceaux d'interférence formés par interférence de faisceaux réfléchis par la surface de référence et de faisceaux réfléchis par la surface de test, et fournir en sortie un signal d'interférence ; et
une unité de traitement (13) configurée pour effectuer un traitement d'obtention de la distance,
dans lequel l'unité de traitement est configurée pour commander le balayage d'une fréquence de la lumière provenant d'une première source de lumière (1) parmi les n sources de lumière à balayage de fréquence dans une première direction à une première vitesse de balayage, et pour commander le balayage d'une fréquence de la lumière provenant d'une deuxième source de lumière (2) différente de la première source de lumière, parmi les n sources de lumière à balayage de fréquence, dans une deuxième direction opposée à la première direction à une deuxième vitesse de balayage différente de la première vitesse de balayage, et
l'unité de traitement est configurée pour obtenir la distance en séparant le signal d'interférence, cela consistant à détecter des résultats des n faisceaux d'interférence, fournis en sortie par le détecteur, en n signaux correspondant aux n signaux d'interférence, et à traiter les n signaux tout en commandant les n sources de lumière à balayage de fréquence,
**caractérisé en ce que**
l'unité de traitement est configurée pour commander les n sources de lumière à balayage de fréquence de manière à avoir :

$$\sum \frac{fc_i}{fv_i} = 0$$

où $fc_i$ est une fréquence centrale de la lumière provenant de chacune des n sources de lumière à balayage de fréquence, i étant un entier de 1 à n, et fvi est une vitesse de balayage d'une fréquence de la lumière provenant de chacune des n sources de lumière à balayage de fréquence, i étant un entier de 1 à n.

2. Appareil selon la revendication 1, dans lequel
l'appareil de mesure comprend n sources de lumière à balayage de fréquence, n étant un entier non inférieur à 3, et l'unité de traitement est configurée pour commander le balayage d'une fréquence de la lumière provenant d'une troisième source de lumière (3) différente de la première source de lumière et de la deuxième source de lumière dans l'une de la première direction et de la deuxième direction, à une troisième vitesse de balayage différente de la première vitesse de balayage et de la deuxième vitesse de balayage.

3. Appareil selon la revendication 1, dans lequel
l'unité de traitement est configurée pour effectuer une analyse de fréquence sur le signal d'interférence fourni en sortie par le détecteur afin de séparer le signal d'interférence en les n signaux correspondant aux n faisceaux d'interférence, et
l'unité de traitement est configurée pour obtenir, en tant que distance, une distance obtenue en moyennant les distances entre la surface de référence et la surface de test, qui sont calculées à partir de n fréquences crêtes correspondant aux n signaux obtenus par l'analyse de fréquence.

4. Appareil selon l'une quelconque des revendications 1 à 3, dans lequel
le détecteur comprend une pluralité de régions de détection dans lesquelles un faisceau contenant n faisceaux d'interférence est détecté à une pluralité de positions sur la surface de test, et
l'unité de traitement est configurée pour obtenir une forme de la surface de test en obtenant des distances à la pluralité de positions sur la base de signaux d'interférence fournis en sortie par les régions de détection respectives.

# FIG. 1

MAA

# F I G. 2

INTERFERENCE
SIGNAL

TIME

# F I G. 3

INTENSITY

P1

P2

FREQUENCY

# F I G.  4

START

OBTAIN INTERFERENCE SIGNAL S12 — **S402**

SPECIFY PEAK FREQUENCIES
P1 AND P2 — **S404**

CALCULATE DISTANCES $L_1$ AND $L_2$ — **S406**

CALCULATE DISTANCE L — **S408**

END

# F I G. 5

MAB

# FIG. 6

```
              ┌──────────┐
              │  START   │
              └──────────┘
                   │
                   ▼
   ┌─────────────────────────────────┐
   │  OBTAIN INTERFERENCE SIGNAL S123 │ ── S602
   └─────────────────────────────────┘
                   │
                   ▼
   ┌─────────────────────────────────┐
   │     SPECIFY PEAK FREQUENCIES     │ ── S604
   │          P1, P2, AND P3          │
   └─────────────────────────────────┘
                   │
                   ▼
   ┌─────────────────────────────────┐
   │  CALCULATE DISTANCES L1, L2, AND L3  │ ── S606
   └─────────────────────────────────┘
                   │
                   ▼
   ┌─────────────────────────────────┐
   │     CALCULATE FRACTIONAL PHASES  │ ── S608
   │          φ1, φ2, AND φ3          │
   └─────────────────────────────────┘
                   │
                   ▼
   ┌─────────────────────────────────┐
   │     CONNECT FRACTIONAL PHASES    │ ── S610
   │           φ1 AND φ2              │
   └─────────────────────────────────┘
                   │
                   ▼
   ┌─────────────────────────────────┐
   │      CALCULATE DISTANCE L12      │ ── S612
   └─────────────────────────────────┘
                   │
                   ▼
   ┌─────────────────────────────────┐
   │     CONNECT FRACTIONAL PHASES    │ ── S614
   │           φ1 AND φ3              │
   └─────────────────────────────────┘
                   │
                   ▼
   ┌─────────────────────────────────┐
   │       CALCULATE DISTANCE L       │ ── S616
   └─────────────────────────────────┘
                   │
                   ▼
              ┌──────────┐
              │   END    │
              └──────────┘
```

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 7120211 A
- US 2011205523 A1
- US 2007189341 A1

### Non-patent literature cited in the description

- **HAI-JUN YANG ; KEITH RILES.** High-precision absolute distance measurement using dual-laser frequency scanned interferometry under realistic conditions. *Nuclear Instruments & Methods in Physics Research, Section A,* 01 June 2007, vol. 575 (3), 395-401